# EUROPÄISCHE PATENTSCHRIFT

(11) **EP 1 060 152 B1**
(45) Veröffentlichungstag und Bekanntmachung des Hinweises auf die Patenterteilung: **25.10.2006**
(21) Anmeldenummer: 99939321.8
(22) Anmeldetag: 15.06.1999
(51) Int. Cl.: C04B 35/626, C04B 35/486, C01B 13/18, C01G 25/02

(54) **VERFAHREN ZUR HERSTELLUNG KERAMISCHER PULVER UNTER EINSATZ VON GASVERDRÄNGENDEN ODER GASERZEUGENDEN ZUSATZSTOFFEN**
METHOD FOR PRODUCING CERAMIC POWDERS USING GAS-EXPELLING OR GAS-GENERATING ADDITIVES
PROCEDE DE PRODUCTION DE POUDRES CERAMIQUES AU MOYEN D'ADDITIFS DEPLA ANT UN GAZ OU PRODUISANT UN GAZ

(30) Priorität: 14.08.1998 DE 19836989
(43) Veröffentlichungstag der Anmeldung: 20.12.2000
(73) Patentinhaber: ROBERT BOSCH GMBH, 70442 Stuttgart (DE)
(72) Erfinder: FRIESE, Karl-Hermann, D-70299 Leonberg (DE)
(86) Internationale Anmeldenummer: PCT/DE1999/001739
(87) Internationale Veröffentlichungsnummer: WO 2000/009461

(56) Entgegenhaltungen:
- US-A- 4 695 439
- PATENT ABSTRACTS OF JAPAN vol. 009, no. 012 (C-261), 18. Januar 1985 (1985-01-18) & JP 59 162130 A (NIPPON KOKAN KK), 13. September 1984 (1984-09-13)
- DATABASE WPI Section Ch, Week 198506 Derwent Publications Ltd., London, GB; Class E36, AN 1985-034233 XP002121888 & JP 59 227725 A (ASAHI CHEM IND CO LTD), 21. Dezember 1984 (1984-12-21)
- PATENT ABSTRACTS OF JAPAN vol. 017, no. 303 (C-1069), 10. Juni 1993 (1993-06-10) & JP 05 024844 A (TOSOH CORP), 2. Februar 1993 (1993-02-02)
- DATABASE WPI Section Ch, Week 199431 Derwent Publications Ltd., London, GB; Class L02, AN 1994-252584 XP002121889 & JP 06 183820 A (TOSOH CORP), 5. Juli 1994 (1994-07-05)
- DATABASE WPI Section Ch, Week 199346 Derwent Publications Ltd., London, GB; Class L02, AN 1993-366246 XP002121890 & SU 1 772 099 A (UKR REFRACTORIES RES INST), 30. Oktober 1992 (1992-10-30)

## Beschreibung

### Stand der Technik

Die Erfindung geht aus von einem Verfahren zur Herstellung keramischer Pulver nach Gattung des Hauptanspruchs. Derartige Verfahren sind beispielsweise Lichtbogenschmelzverfahren wie sie aus dem Artikel von H. Thomas, Ceramic Technology International, 1992, Seiten 65 bis 68, bekannt sind. Bei der thermischen Behandlung und insbesondere dem Schmelzen von keramischen Pulvern können jedoch Gaseinschlüsse und Gase aus der Umgebung (insbesondere Stickstoff aus der Umgebungsluft) in das Kristallgitter des als Vorprodukt erhaltenen Schmelzgutes oder keramischen Körpers eingebaut werden. Nach einer Weiterverarbeitung dieses Vorproduktes zu einem keramischen Pulver, beispielsweise durch Aufmahlen, kann es dann bei einem nachfolgenden Sintern des keramischen Pulvers zu einer Aufblähung des Keramikgefüges durch Gasaustreibung kommen (vgl. M. Merch, J. Am. Ceram. Soc, 79, (1996), p.2641-44 und M. Merch et al., J. Mat. Sci. Letters, 15, (1996), p. 2127-29). Dieses Problem tritt insbesondere bei der Fertigung planarer Sensorelemente auf Basis von mit Y₂O₃ stabilisiertem ZrO₂ auf. Die dazu eingesetzten keramischen Pulver werden häufig im Lichtbogenschmelzverfahren mit anschließender Mahlung und Korngrößenfraktionierung hergestellt und abschließend nach einer Formgebung gesintert. Sie eignen sich für planare Sensorelemente besonders wegen ihrer günstigen Eigenschaften zum Foliengießen und aufgrund ihrer günstigen Sinteraktivität.

Zur Vermeidung unerwünschter Gaseinschlüsse oder des Einbaus von Gasatomen in das keramische Ausgangsmaterial während des Schmelzens wurde bisher der Schmelzprozeß teilweise unter Schutzgasatmosphäre durchgeführt, um so z. B. eine Verdrängung der Umgebungsluft aus den Ausgangspulvern bzw. dem keramischen Haufwerk vor und während des eigentlichen Schmelzprozesses zu erreichen. Dabei treten aber regelmäßig noch Bereiche mit unerwünscht hohen Restgaskonzentrationen oder Gaseinschlüssen (sog. "Luftnester") in Pulveragglomeraten im Haufwerk auf.

Eine alternativer, bekannter Prozeß, ebenfalls mit dem Ziel der Stickstoffaustreibung, ist beispielsweise das Kalzinieren eines erstarrten oder aufgebrochenen Schmelzgutes aus yttriumstabilisiertem Zirkondioxid bei ca. 1600°C in einer oxidierenden Atmosphäre vor dem abschließenden Mahl- oder Klassierprozeß. Dieses Verfahren des Nachkalzinierens von Keramiken zur Erhöhung der Sinterdichte ist bereits von Esper und Friese (DKG-Jahrestagung 1972, Tagungsband XXIX, Seiten 1 bis 13) am Beispiel von Tonerden, die β-Tonerde enthalten und die sich wiederum zu Na₂O und Al₂O₃ zersetzen und dabei aufgrund des entstehenden Dampfdruckes das Keramikgefüge aufblähen kann, beschrieben. Die Nachteile dieser Methoden liegen jedoch offensichtlich in dem großen technischen Aufwand für einen weiteren Kalzinierungsschritt und der vielfach nicht ausreichenden nachträglichen Verdrängung von Restgasen aus dem Keramikpulver bzw. einem entsprechenden Vorprodukt.

Die Aufgabe der Erfindung besteht darin, an sich bekannte Verfahren zur Herstellung keramischer Pulver, die von einer thermischen Behandlung der Ausgangspulver ausgehen, dergestalt zu verbessern, daß bestehende Gaseinschlüsse oder Gasbestandteile vor oder während der Herstellung aus dem keramischen Ausgangspulver oder dem keramischen Schlicker zu einem wesentlichen Teil verdrängt werden. Darüber hinaus soll das Verfahren sich dazu eignen bestimmte Partialdrücke eines oder mehrerer erwünschter Gase im erhaltenen keramischen Pulver gezielt einzustellen.

### Vorteile der Erfindung

Das erfindungsgemäße Verfahren mit den kennzeichnenden Merkmalen des Hauptanspruchs hat gegenüber dem Stand der Technik den Vorteil, daß es wesentlich rationeller und effektiver hinsichtlich der Vollständigkeit der Gasverdrängung bzw. der Partialdruckeinstellung und der technischen Prozeßführung ist. So kann durch feste oder flüssige Zusatzstoffe, die beispielsweise bei ihrer Verdampfung oder Sublimation oder thermischen Zersetzung eine erhebliche Volumenzunahme erfahren, ein Gas schon mit relativ kleinen Mengen an Zusatzstoffen weitgehend oder vollständig aus dem oder den keramischen Ausgangspulvern oder dem Schlicker als Ausgangsmaterial verdrängt werden. Über die Zusatzstoffe können außerdem gezielt Gase in das keramische Pulver eingebracht werden, die in den keramischen Ausgangsmaterialien nicht enthalten waren, so daß das erfindungsgemäße Verfahren eine breite Palette an Möglichkeiten eröffnet, das erhaltene keramische Pulver in seinen Eigenschaften und speziell seinem Sinterverhalten zu modifizieren. Diese Vorgehensweise erlaubt beispielsweise, laubt beispielsweise, gezielt eine Einstellung eines Sauerstoffpartialdruckes oder die Dotierung einer Keramik bzw. eines Keramikpulvers mit Sauerstoffehlstellen, was insbesondere im Bereich keramischer Sensorelemente auf Basis von sauerstoffionenleitendem, yttriumstabilisiertem ZrO₂ große technische Bedeutung hat. Desweiteren kann durch die Zugabe entsprechender Zusatzstoffe auch die Sinteraktivität des erhaltenen keramischen Pulvers bei dessen Weiterverarbeitung verbessert werden.

Durch die in den Unteransprüchen aufgeführten Maßnahmen sind vorteilhafte Weiterbildungen des erfindungsgemäßen Verfahrens möglich.

Besonders vorteilhaft kann ein Gas beispielsweise aus Pulveragglomeraten im Haufwerk oder aus Einschlüssen in einem keramischen Schlicker weitgehend verdrängt oder ein Partialdruck eingestellt werden, wenn die Zusatzstoffe bereits vor der eigentlichen Umformierung als Mahlhilfsmittel dem Ausgangspulver zugegeben wurden und/oder in Form eines Bindersystems in den keramischen Schlicker oder das keramische Pulver eingearbeitet werden. In einer Weiterbildung können mit dieser Behandlung eine Pellettierung oder Granulierung der Ausgangsmaterialien vor der eigentlichen Umformierung der Zusatzstoffe im Zuge einer thermischen Behandlung der Ausgangspulver oder Schlicker erreicht werden. Durch derartige Aufbereitungschritte können die Zusatzstoffe sehr gleichmäßig in Pulveragglomeraten oder in keramischen Schlickern verteilt und die Pulverausschüttung ausreichend locker gestaltet werden, was beispielsweise eine schnelle und ausreichende Entlüftung eines Pulverhaufwerkes begünstigt. Durch Zugabe mehrerer verschiedener Zusatzstoffe eröffnet sich auch die Möglichkeit, Gase wie beispielsweise Luft oder Stickstoff während der Umformierung der Zusatzstoffe durch thermische Behandlung der Ausgangsmaterialien über einen sehr breiten Temperaturbereich zu verdrängen und damit eine explosionsartige Gasentwicklung zu vermeiden. Solche Kombinationen von Zusatzstoffen können beispielsweise günstig mit Lösungen, Emulsionen oder Suspensionen realisiert werden, wie sie in der keramischen Aufbereitungstechnik bekannt sind.

Im Fall der Verwendung von einem Gemisch aus einem Y₂O₃-Ausgangspulver und einem ZrO₂- Ausgangspulver kann man beispielsweise mit dem erfindungsgemäßen Verfahren eine stickstoffarme Gitterstruktur und infolgedessen eine hohe Sinterdichte der hergestellten yttriumstabilisierten ZrO₂-Keramik erreichen, ohne daß ein nachteiliges Aufblähen des Keramikgerüstes beim Sintern auftritt. Eine technisch besonders einfache und vorteilhafte Variante des Verfahrens ergibt sich, wenn man den feinteiligen keramischen ZrO₂- und Y₂O₃₋Ausgangspulvern die entsprechenden Hydroxide vor oder während der thermischen Behandlung bzw. im konkreten Fall vor oder während eines Lichtbogenschmelzens zusetzt, die dann unter Freisetzung von Wasserdampf zu den entsprechenden Oxiden umformiert werden, wobei der entstehende Wasserdampf die Luft oder Stickstoff aus dem Pulverhaufwerk verdrängt und gegebenenfalls bei hohen Temperaturen weiter zu Wasserstoff und Sauerstoff dissoziiert.

### Zeichnung

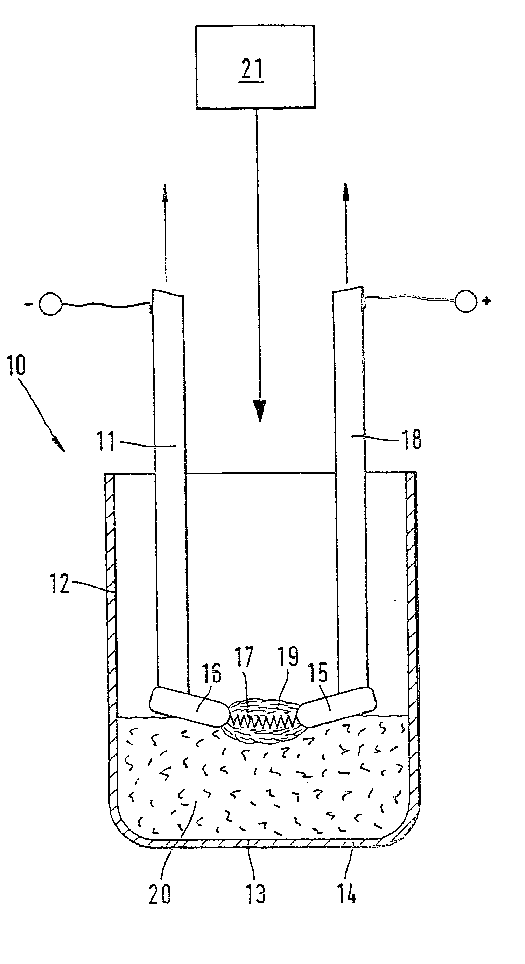

Ein Ausführungsbeispiel der Erfindung wird anhand der Zeichnung und in der nachfolgenden Beschreibung näher erläutert. Die einzige Figur zeigt eine Prinzipskizze einer Lichtbogenschmelzvorrichtung.

### Ausführungsbeipiele

Eine in der Figur dargestellte Lichtbogenschmelzeinrichtung 10 weist zwei Elektroden 15 und 16 mit Elektrodenzuleitungen 11 und 18 auf. Die Elektroden 15 und 16 bestehen beispielsweise aus Graphit und sind in einem Tiegel 14 beispielsweise aus Graphit oder Grauguß mit einer Tiegelwandung 12 und einem Tiegelboden 13 angeordnet. Zwischen den Elektroden 15 und 16 bildet sich ein Lichtbogen 17 aus. Über dem Tiegel 14 befindet sich ein Behälter mit einer Ausgangsmischung 21, die ein keramisches Ausgangspulver oder einen keramischen Ausgangsschlicker oder ein Gemisch dieser Bestandteile sowie Zusatzstoffe enthält. Die Ausgangsmischung wird in die Schmelzzone 19 geführt. Dies geschieht beispielsweise dadurch, daß die Ausgangsmischung 21 aus dem Behälter freigegeben wird, so daß diese zwischen den Elektroden 15, 16 und damit durch die Schmelzzone 19 fließt. Die Ausgangsmischung 21 kann sich aber auch bereits zu Beginn des Schmelzprozesses bereits im Tiegel 14 befinden. Weitere dem Fachmann ohnehin bekannte Details des Lichtbogenschmelzaufbaus werden in der Figur nicht dargestellt. Am Boden 13 des Tiegels 14 stellt sich unterhalb der Schmelzzone 19 ein Vorprodukt 20 ein, das beispielsweise durch nachfolgendes Aufmahlen zu einem keramischen Pulver weiterverarbeitet wird.

Die technische Ausgestaltung des in der Figur in seinem prinzipiellen Aufbau skizzierten Lichtbogenschmelzprozesses unterliegt vielfältigen, an sich bekannten technischen Varianten und Ausgestaltungen z.B. hinsichtlich der Zuführung der keramischen Ausgangspulver oder Schlicker und der Zusatzstoffe in den eigentlichen Schmelzbereich.

Das Nachfüllen der Ausgangsmischung 21 kann beispielsweise dadurch erfolgen von oben ständig die keramischen Ausgangspulver oder Schlicker und die Zusatzstoffe als Ausgangsmischung 21 nachführt werden, so sich die Schmelzzone 19 und somit die gerade aufgeschmolzene Keramik sich ähnlich wie bei einem Zonenschmelzverfahren in der Nähe der Oberfläche des im Tiegel 14 befindlichen Materials befindet, während die darunter liegenden Bereiche mit dem erzeugten Vorprodukt 20 bereits allmählich abkühlen.

Der in der Figur skizzierte, an sich bekannte Prozeß des Lichtbogenschmelzens kann in einer Weiterbildung auch ohne einen Tiegel erfolgen, indem man ähnlich wie beim Plasmaspritzen beispielsweise in einen Lichtbogen an Luft oder unter Stickstoff oder unter einer Schutzgasatmosphäre direkt die keramischen Ausgangspulver oder Schlicker mit den Zusatzstoffe einspritzt, dabei die Zusatzstoffe im Lichtbogen umformiert und die aufgeschmolzenen Keramikpulver beispielsweise über eine Fallstrecke abkühlen läßt und außerhalb der heißen Zone des Lichtbogens auffängt. Das so erhaltene, bereits pulverförmige Vorprodukt wird anschließend gemahlen.

Eine besonders vorteilhafte Prozeßführung beispielsweise beim Lichtbogenschmelzprozeß ergibt sich, wenn die von den Zusatzstoffen entwickelten Gase oder Dämpfe schwerer als Luft sind und dadurch am zu frühen Entweichen aus dem Schmelztiegel gehindert werden.

In einer weiteren Verfahrensvariante können sich die keramischen Ausgangspulver und/oder die Zusatzstoffe auch bereits vor dem eigentlichen Lichtbogenschmelzprozeß in dem Tiegel 14 in Form eines Haufwerkes befinden. Alternativ kann sich auch nur das keramische Ausgangspulver bereits im Tiegel 14 befinden, während die Zusatzstoffe von außen in die Schmelzzone 21 eingeführt werden. In einer weiteren Verfahrensvariante werden die Zusatzstoffe auf dem Tiegelboden 13 eingefüllt und/oder als Film oder Beschichtung auf die Tiegelwandung 12 aufgebracht.

Das erfindungsgemäße Verfahren zur Herstellung eines keramischen Pulvers geht aus von einem oder mehreren keramischen Ausgangspulvern oder einem keramischen Schlicker. Der Schlicker kann dabei ein oder mehrere keramische Ausgangspulver als Bestandteile enthalten. Diesen Ausgangsmaterialien wird im weiteren mindestens ein Zusatzstoff zugesetzt, der bei einer thermischen Behandlung der Ausgangsmaterialien derartig umformiert wird, daß zunächst im danach erhaltenen Vorprodukt und später im daraus gewonnenen keramischen Pulver Gasbestandteile verdrängt oder in einer chemischen Reaktion gebunden werden, oder daß vom Zusatzstoff freigesetzte Gase gezielt einen Partialdruck im keramischen Pulver einstellen. Der Zusatzstoff kann dabei fest oder flüssig sein oder in Form eines Pulvers, einer Lösung, Emulsion oder Suspension vorliegen.

Das Zusetzten des oder der Zusatzstoffe zu den Ausgangsmaterialien kann während eines der thermischen Behandlung vorangehenden Mahlens oder Mischens der keramischen Ausgangspulver oder des keramischen Schlickers erfolgen, wobei der Zusatzstoff gleichzeitig auch als Binder, Lösungsmittel oder Weichmacher für das keramische Ausgangspulver oder den keramischen Schlicker verwendet werden kann. In technisch sehr vorteilhafter Ausgestaltung kann zur leichteren Handhabung der Ausgangsmaterialien, denen die Zusatzstoffe zugesetzt wurden, anschließend auch eine partielle oder vollständige Trocknung dieser Mischung oder dieses Schlickers erfolgen. Diese Trocknung kann beispielsweise eine Sprühtrocknung oder Gefriertrocknung sein. Zusatzstoffe die gleichzeitig auch als Binder oder Bindersystem für die keramischen Ausgangspulver eingesetzt werden, können in besonders vorteilhafter Ausgestaltung der Erfindung auch zur Granulierung und/oder Pelletrierung der keramischen Ausgangspulver dienen und somit deren Handhabung im weiteren Verfahren erheblich vereinfachen.

Eine weitere Form des Einbringens der Zusatzstoffe kann die Lagerung der keramischen Ausgangspulver in einer, vorzugsweise gesättigten Dampf- oder Gasatmosphäre des Zusatzstoffes sein.

Zur Verbesserung der Resultate beim Umformieren der Zusatzstoffe durch thermische Behandlung hinsichtlich der Vollständigkeit der Vermeidung von unerwünschten Gasbestandteilen im als Endprodukt erhaltenen keramischen Pulver, wird weiterhin vor oder während der Umformierung eine Bespülung mit einem stickstoffarmen oder stickstofftreien Gas oder Gasgemisch vorgenommen. Für diese Bespülung eignet sich in vielen Fällen beispielsweise Argon oder ein anderes Edelgas, es kommen aber auch andere stickstoffarme oder stickstofffreie Gase oder Gasgemische wie z. B. CO₂ in Frage.

Unter der Umformierung der Zusatzstoffe bei der thermischen Behandlung ist beispielsweise eine thermische Zersetzung, eine Verbrennung, eine Dissoziation, ein Schmelzen unter Gasentwicklung, eine Verdampfung, eine Sublimation, eine Gasdesorption aus dem Zusatzstoff oder eine sonstige chemische Reaktion zu verstehen, wobei die Gase aus den keramischen Ausgangspulvern oder dem keramischen Schlicker verdrängt bzw. durch andere Gase ersetzt werden, oder solche Gase in einer chemischen Reaktion gebunden werden, oder wobei vom Zusatzstoff freigesetzte oder gebundene Gase im erhaltenen keramischen Pulver gezielt einen Partialdruck eines Gases oder eines Gasgemisches einstellen. Im Ergebnis führt die Zugabe des Zusatzstoffes zu einem Vorprodukt, das dann in einem nachfolgenden Schritt zu einem keramischen Pulver verarbeitet wird. Dieses keramische Pulver wird dann beispielsweise zur Fertigung planarer, keramischer Sensorelemente eingesetzt. Ein Ausführungsbeispiel für die Herstellung eines erfindungsgemäßen keramischen Pulvers ist das nachfolgend offenbarte yttriumstabilisierte ZrO₂-Pulver.

Die zu vermeidenden Gasbestandteile können beispielsweise durch Gaseinschlüsse in den keramischen Ausgangspulvern oder dem keramischen Schlicker, durch Gaseinlagerungen in das Pulverhaufwerk der Ausgangspulver nach dem Mahlen oder Mischen, durch die umgebende oder vorliegende Gasatmosphäre vor oder während der thermischen Behandlung der Ausgangspulver oder Schlicker oder durch Gasdesorptionen oder gasförmige Reaktionsprodukte vor oder während der thermischen Behandlung aus den Ausgangsmaterialien gegeben sein. Die thermische Behandlung zur Erzeugung des Vorproduktes kann im erfindungsgemäßen Verfahren beispielsweise ein Schmelzen, insbesondere ein Lichtbogenschmelzprozeß, ein Sintern oder eine exotherme chemische Reaktion sein. Die Weiterverarbeitung des Vorproduktes, das beispielsweise danach als Schmelzmasse oder als keramischer Sinterkörper vorliegt zu dem keramischen Pulver erfolgt anschließend beispielsweise durch Aufmahlen des Vorproduktes, wahlweise mit einer nachfolgenden Korngrößenfraktionierung. Das keramische Pulver als Endprodukt des erfindungsgemäßen Herstellungsverfahrens kann dann beliebig, beispielsweise beim Foliengießen weiterverarbeitet werden.

Die notwendigen Mengen an Zusatzstoffen zur Vermeidung von Gasbestandteilen im keramischen Pulver oder zur Einstellung eines Gaspartialdruckes ergeben sich im Einzelfall aus den jeweiligen Abmessungen der Schmelzanlage, der Dichte bzw. Porosität der keramischen Pulver bzw. Schlicker und dem für das jeweilige Material und der jeweiligen Anwendung erforderlichen Grad der Vermeidung von Gasbestandteilen.

Als für die Praxis geeignete Größe für eine weitgehende oder vollständige Vermeidung von Gasbestandteilen im keramischen Pulver hat sich herausgestellt, daß die Menge der umformierten Zusatzstoffe so bemessen sein sollte, daß diese bei der thermischen Behandlung ein Gasvolumen freisetzen oder beanspruchen, das - je nach erforderlichem Grad der Vermeidung bzw. Verdrängung und der Breite des Temperaturbereiches der Gasfreisetzung zur Einstellung eines Gaspartialdruckes -etwa dem 0,5- bis 100-fachen Volumen der Ausgangsmaterialien bei der thermischen Behandlung entspricht. Bei einer zu geringen Menge von Zusatzstoffen wird keine ausreichende Vermeidung bzw. Einstellung von Gasbestandteilen erreicht. Bei erheblich zu hohen Mengen an Zusatzstoffen treten bei einer in einem engen Temperaturbereich ablaufenden Umformierung unter Umständen nachteilige explosionsartige Volumenzuwächse auf.

Eine bevorzugte Ausgestaltung des erfindungsgemäßen Verfahrens sieht zur Vermeidung derartiger explosionsartiger Umformierungen vor, daß die sich die Umformierung über einen möglichst breiten Temperaturbereich erstreckt. Der Temperaturbereich in dem die Umformierung des Zusatzstoffes erfolgt, hängt sehr stark von der Wahl des Zusatzstoffes ab. Im Fall von Wasser liegt der Temperaturbereich um 100°C, bei anderen Zusatzstoffen werden aber auch Temperaturen bis 1200°C erreicht. Der jeweils relevante Temperaturbereich ergibt sich für den Fachmann im Einzelfall aus den chemischen Eigenschaften der gewählten Zusatzstoffe. Dies gilt insbesondere auch für die gezielte Einstellung eines Gaspartialdruckes und speziell eines Sauerstoffpartialdruckes im keramischen Pulver.

Die für den Fachmann überschlägig zu bestimmenden Parameter für das erfindungsgemäße Herstellungsverfahren sind somit das Volumen der Schmelzzone 19 oder das von den Ausgangsmaterialien eingenommene Volumen bei der thermischen Umsetzung, die einzusetzende Menge an Zusatzstoffen bzw. das Verhältnis des aus den Zusatzstoffen freizusetzenden Gases.

Das erfindungsgemäße Herstellungsverfahren sei am Beispiel des in der Figur dargestellten eines Lichtbogenschmelzverfahrens erläutert, mit dessen Hilfe keramisches, yttriumstabilisiertes ZrO₂-Pulver hergestellt wird, wobei das erhaltene keramische Pulver eine möglichst geringe Konzentration an Stickstoffbestandteilen enthalten soll, damit es nachfolgend zum Foliengießen verwendet und danach gesintert werden kann, ohne daß es zu einer Aufblähung des Keramikgefüges durch Austreibung von Stickstoff kommt. Entsprechend ist der durch die Umformierung des Zusatzstoffes zu vermeidende Gasbestandteil in diesem Fall Stickstoff, der auch in erheblichem Umfang in der beim Lichtbogenschmelzen gegebenen Gasatmosphäre enthalten ist.

Messungen an diesem keramischen ZrO₂/Y₂O₃-Pulver haben ergeben, daß die Aufblähung durch Stickstoffaustreibung beim Sintern zwischen 1400°C und 1600°C dazu führen kann, daß der bei 1400°C zunächst erreichte Wert der Sinterdichte des Keramikgerüstes von über 90% der maximalen theoretische Dichte des Keramikgerüstes durch Stickstoffaustreibung nahe 1600°C wieder auf ca. 75% absinkt. Durch das erfindungsgemäße Verfahren ließ sich dieses Absinken durch Aufblähung vollständig vermeiden und die Sinterdichte stieg auch zwischen 1400°C und 1600°C kontinuierlich weiter auf bis zu 99% an. Um diese Aufblähung zu vermeiden war es ausreichend, den Stickstoffanteil im Keramikgerüst des keramischen Pulver um einen Faktor zwei zu verringern, was im konkreten Ausführungsbeispiel eine Stickstoffreduktion von ca. 2800 ppm auf ca. 1300 ppm bedeutete.

Tabelle 1 zeigt eine Auswahl von Zusatzstoffen zu einem ZrO₂-/Y₂O₃-Pulvergemisch zur Austreibung von Stickstoff aus dem erhaltenen keramischen Pulver sowie deren Aggregatzustände, mögliche Verfahren der Zugabe der Zusatzstoffe zu den keramischen Ausgangspulvern oder Schlickern gemäß Tabelle 2 und mögliche Kombinationen der Zusatzstoffe. Diese Zusammenstellung ist keineswegs vollständig und nur als beispielhaft für das erfindungsgemäße Verfahren anzusehen.

**Tabelle 1: Zusatzstoffe zu einem ZrO₂-/Y₂O₃ Pulvergemisch**

| lfd. Nr. | Zusatzstoffe | Aggregatzustand | Verfahren (Tabelle 2) | mögliche Kombinationen | weitere mögliche Funktionen |
|---|---|---|---|---|---|
| 1 | Wasser | flüssig | a, b, c, d, e | +Ar, +CO₂ | Lösungsmittel |
| 2 | CO₂-Trockeneis | fest | d, e | +alle | O₂-Partialdruck |
| 3 | Methanol | flüssig | a, c, d, e | +2 | O₂-Partialdruck |
| 4 | Propanol | flüssig | a, c, d, e | +2; +3 | O₂-Partialdruck |
| 5 | Polyvinylalkohol | fest | a, b | +2 | Binder |
| 6 | Wachs (Mulrex) | fest | a, b | wäßr. Emulsion | Binder |
| 7 | Polyvinylbutyral | fest | a, b | +8, +9 | Binder |
| 8 | Butylcabitol | flüssig | a, b, d, e | +7, +9 | Lösungsmittel |
| 9 | Polyglykol | flüssig | a, b, d, e | +7, +8 | Weichmacher |
| 10 | Propandiol | flüssig | a, b, d, e | | Mahlhilfsmittel |
| 11 | Terpineol | flüssig | a, b, d, e | | Lösungsmittel |
| 12 | Zr-Butylat | flüssig | a, b | | Sinteraktivität |
| 13 | Al-Stearat | fest | a, b | +14, +15 | Sinteraktivität |
| 14 | Zr-Hydroxid | fest | a | +13, +15, +16 | |
| 15 | Yttriumhydroxid | fest | a | +14, +13, +16 | |
| 16 | Al(OH₃). AlO(OH) | fest | a | +14, +15, +13 | Sinteraktivität |
| 17 | Erdalkalioxide | fest | a, d | | Behinderung eines Gaseinbaus im keramischen Pulver |
| 18 | Alkalioxide | fest | a, d | | |

Die Zusatzstoffe können gleichzeitig auch weitere Funktionen wie beispielsweise als Lösungsmittel für den keramischen Schlicker, als Weichmache, Binder, Mahlhilfsmittel, als Zusatz zur Förderung der Sinteraktivität des keramischen Pulvers oder als Zusatz zum Einstellen eines gewünschten Gaspartialdruckes erfüllen. Insbesondere die Einstellung eines Sauerstoffpartialdruckes ist im Fall des keramischen ZrO₂-/Y₂O₃-Pulvers von technischer Bedeutung.

**Tabelle 2: Möglichkeiten zum Zusetzen der Zusatzstoffe**

| | |
|---|---|
| a.) | Zugabe als Pulver oder Lösung oder Emulsion oder Suspension beim Mahlen oder Mischen der keramischen Ausgangspulver oder Schlicker |
| b.) | Zugabe als Lösung oder Emulsion oder Suspension beim Mahlen oder Mischen der keramischen Ausgangspulver oder Schlicker mit anschließender partieller oder vollständiger Trocknung (z.B. als Sprühtrocknung oder Gefriertrocknung des erhaltenen Schlickers) |
| c.) | Lagern des keramischen Ausgangspulvers in einer, vorzugsweise gesättigten Dampfatmosphäre des Zusatzstoffes (Mauken) |
| d.) | Eindüsen oder Einsprühen der Zusatzstoffe oder einer Lösung oder Emulsion oder Suspension der Zusatzstoffe in das keramische Ausgangspulver oder den keramischen Schlicker |
| e.) | Einfüllen der Zusatzstoffe auf den Tiegelboden 13 oder als Film oder Beschichtung an der Tiegelwandung 12 im Rahmen eines Lichtbogenschmelzaufbaus 10 |

Bei der Verwendung von Wasser nutzt man unter anderem bei hohen Temperaturen dessen Dissoziation zu Wasserstoff und Sauerstoff aus. Trockeneis reagiert bei hohen Temperaturen zu Kohlenmonoxid und Sauerstoff. Zr-Butylat bildet beim Lichtbogenschmelzprozeß ZrO₂. Al-Stearat bildet beim Lichtbogenschmelzprozeß Al₂O₃, was insbesondere die Sinteraktivität des erhaltenen ZrO₂-/Y₂O₃-Pulvers fördert. Zirkonhydroxid und Yttriumhydroxid als Zusatzstoffe erlauben ein technisch besonders einfaches und wirtschaftliches Herstellungsverfahren, da sie sich oberhalb von ca. 400°C zu ZrO₂ bzw. Y₂O₃ und Wasserdampf umsetzen, der im weiteren dissoziiert und somit Gasbestandteile im keramischen Pulver vermeidet. Entsprechend ist es möglich, die Zugabe des zur Stabilisierung des ZrO₂ erforderlichen Yttriumoxides (in der Regel ca. 8 Gew.%) teilweise oder vollständig über ein Mischen eines keramischen ZrO₂-Ausgangspulver mit einem Yttriumhydroxid als Zusatzstoff zu realisieren, was den besonderen Vorteil hat, daß keine unerwünschten Rückstände des Zusatzstoffes im keramischen Pulver verbleiben. Alternativ oder zusätzlich kann man auch ein Teil, vorzugsweise zur Vermeidung zu großer Gasmengen ca. 50 Mol% des keramischen ZrO₂-Ausgangspulvers über Zirkonhydroxid als Zusatzstoff einbringen und das Yttriumoxid über ein Yttriumhydroxid als Zusatzstoff oder ein Yttriumoxidausgangspulver einbringen. Die Zugabe geringer Mengen (bis zu 5 Gew.%) an Aluminiumhydroxid (Al(OH)₃ oder AlOOH) setzt ebenfalls Wasser bzw. Wasserdampf frei und bildet Al₂O₃, das die Sinteraktivität des keramischen Pulvers fördert. Die Zugabe der genannten Hydroxide ist in der Praxis einfach durch Mischen der keramischen Ausgangspulver mit den Zusatzstoffen oder durch Einarbeiten in einen keramischen Schlicker möglich. Sie sind überdies billig und vermeiden eine zu starke, explosionsartige Gasentwicklung. Ähnliche Vorteile haben auch weitere erfindungsgemäße Zusatzstoffe, die nach ihrer Umformierung als Oxide im keramischen Pulver zurückbleiben.

In einem weiteren Ausführungsbeispiel werden Zirkonhydroxid und/oder Yttriumhydroxid und/oder geringe Mengen von Aluminiumhydroxid (bis zu 5 Gew.%) in Form eines Gemisches als keramische Ausgangspulver oder in Form einer Lösung als Schlicker eingesetzt und im Laufe einer thermischen Behandlung umformiert, wobei Wasser bzw. Wasserdampf freigesetzt wird. In diesem Fall kann auf die Zugabe eines Zusatzstoffes verzichtet werden, da die gaserzeugenden bzw. gasverdrängenden Bestandteile während der Umformierung bereits aus den keramischen Ausgangsmaterialien freigesetzt werden.

## Patentansprüche

1. Verfahren zur Herstellung eines keramischen Pulvers, bei dem mindestens ein keramisches Ausgangspulver oder ein keramischer Schlicker einer thermischen Behandlung zur Erzeugung eines Vorproduktes unterzogen wird, aus dem das keramische Pulver gewonnen wird, **dadurch gekennzeichnet, dass** dem keramischen Ausgangspulver oder dem keramischen Schlicker mindestens ein Zusatzstoff zugesetzt wird, der bei der thermischen Behandlung derart umformiert wird, dass **dadurch** im keramischen Pulver Gasbestandteile verdrängt oder in einer chemischen Reaktion gebunden werden oder dass vom Zusatzstofffreigesetzte Gase einen Partialdruck im keramischen Pulver einstellen, und dass vor oder während der Umformierung des Zusatzstoffes eine Bespülung mit einem stickstoffarmen oder stickstofffreien Gas oder Gasgemisch vorgenommen wird.

2. Verfahren zur Herstellung eines keramischen Pulvers, bei dem mindestens ein keramisches Ausgangspulver oder ein keramischer Schlicker einer thermischen Behandlung zur Erzeugung eines Vorproduktes unterzogen wird, aus dem das keramische Pulver gewonnen wird, **dadurch gekennzeichnet, dass** das keramische Ausgangspulver oder der keramischen Schlicker bei der thermischen Behandlung derart umformiert wird, dass im keramischen Pulver Gasbestandteile verdrängt oder in einer chemischen Reaktion gebunden werden oder dass vom keramischen Ausgangspulver oder vom keramischen Schlicker freigesetzte Gase einen Partialdruck im keramischen Pulver einstellen, und dass vor oder während der Umformierung eine Bespülung mit einem stickstoffarmen oder stickstofffreien Gas oder Gasgemisch vorgenommen wird.

3. Verfahren nach Anspruch 1 oder 2, **dadurch gekennzeichnet, daß** die thermische Behandlung in einem Lichtbogenschmelzprozeß erfolgt und daß das keramische Ausgangspulver oder der keramische Schlicker und der Zusatzstoff im Lichtbogen aufgeschmolzen werden.

4. Verfahren nach Anspruch 1 oder 2, **dadurch gekennzeichnet, daß** die thermische Behandlung zu einer Umformierung durch Zersetzung, Verdampfung, Sublimation oder einer chem. Reaktion unter Gasfreisetzung führt.

5. Verfahren nach Anspruch 1, **dadurch gekennzeichnet, daß** das keramische Ausgangspulver vor der thermischen Behandlung in einer, vorzugsweise gesättigten Dampfatmosphäre des Zusatzstoffes gelagert wird.

6. Verfahren nach Anspruch 1, **dadurch gekennzeichnet, daß** das Zusetzen des Zusatzstoffes während eines vorangehenden Mahlens oder Mischens des keramischen Ausgangspulvers oder Schlickers erfolgt.

7. Verfahren nach Anspruch 1, **dadurch gekennzeichnet, daß** nach dem Zusetzen des Zusatzstoffes zu dem keramischen Ausgangspulver eine partielle oder vollständige Trocknung, vorzugsweise Sprühtrocknung oder Gefriertrocknung erfolgt.

8. Verfahren nach Anspruch 1 oder 2, **dadurch gekennzeichnet, daß** das keramische Ausgangspulver oder der Schlikker ZrO₂, Y₂O₃ oder eine Mischung von ZrO₂ und Y₂O₃ enthält.

9. Verfahren nach Anspruch 2, **dadurch gekennzeichnet, daß** das keramische Ausgangspulver aus Zirkonhydroxid, Yttriumhydroxid, Aluminiumhydroxid, Zirkondioxid, Yttriumoxid oder einer Mischung dieser Komponenten besteht.

10. Verfahren nach Anspruch 1, **dadurch gekennzeichnet, daß** der Zusatzstoff gleichzeitig als Binder, Lösungsmittel oder Weichmacher für das keramische Ausgangspulver oder den keramischen Schlicker verwendet wird.

11. Verfahren nach mindestens einem der vorangehenden Ansprüche, **dadurch gekennzeichnet, daß** der Zusatzstoff freisetzbaren Sauerstoff, Wasserstoff, Kohlenstoff, eine Kombination dieser Gase oder ein sonstiges Gas enthält, das schwerer ist als Luft und das bevorzugt weitgehend frei von Stickstoff und Halogenen ist.

12. Verfahren nach mindestens einem der vorangehenden Ansprüche, **dadurch gekennzeichnet, daß** der Zusatzstoff bei der Umformierung ZrO₂, Y₂O₃, oder Oxide, vorzugsweise Al₂O₃, oder eine Kombination dieser Materialien bildet.

13. Verfahren nach mindestens einem der vorangehenden Ansprüche, **dadurch gekennzeichnet, daß** der Zusatzstoff die Sinteraktivität des keramischen Pulvers fördert.

14. Verfahren nach mindestens einem der vorangehenden Ansprüche, **dadurch gekennzeichnet, daß** der Zusatzstoff als Mahlhilfsmittel dem keramischen Ausgangspulver oder dem keramischen Schlicker zugesetzt wird.

15. Verfahren nach mindestens einem der vorangehenden Ansprüche, **dadurch gekennzeichnet, daß** der Zusatzstoff gleichzeitig als Binder oder Bindersystem für eine Granulierung und/oder Pelletierung des keramischen Ausgangspulvers dient.

16. Verfahren nach mindestens einem der vorangehenden Ansprüche, **dadurch gekennzeichnet, daß** der Zusatzstoff aus der Gruppe Wasser, CO₂-Trockeneis, Methanol, Propanol, Polyvinyalkohol, Wachs, Polyvinylbutyral, Butylcarbitol, Polyglykol, Propandiol, Terpineol, Zirkonbutylat, Aluminiumstearat, Zirkonhydroxid, Yttriumhydroxid, Aluminiumhydroxid (Al(OH)₃ oder AlO(OH)) oder der Alkali- oder Erdalkalioxide ausgewählt wird.

17. Verfahren nach mindestens einem der vorangehenden Ansprüche, **dadurch gekennzeichnet, daß** über die Wahl der Zusatzstoffe der Sauerstoffpartialdruck im keramischen Pulver eingestellt wird.

18. Verfahren nach mindestens einem der vorhergehenden Ansprüche, **dadurch gekennzeichnet, daß** der Zusatzstoff beim Umformieren ein Gasvolumen einnimmt oder freisetzt, das im Bereich des 0,5- bis 100-fachen des abgeschätzten, insgesamt zu verdrängenden Gasvolumens liegt.

19. Verfahren nach Anspruch 1, **dadurch gekennzeichnet, daß** das Vorprodukt durch Aufmahlen zu dem keramischen Pulver weiterverarbeitet wird.

20. Verfahren nach Anspruch 20, **dadurch gekennzeichnet, daß** das Aufmahlen mit anschließender Korngrößenfraktionierung erfolgt.

21. Verwendung des keramischen Pulvers hergestellt nach mindestens einem der vorangehenden Ansprüche zur Fertigung planarer, keramischer Sensorelemente.

## Claims

1. Process for producing a ceramic powder, in which at least one ceramic starting powder or a ceramic slip is subjected to a heat treatment to produce a primary product, from which the ceramic powder is obtained, **characterized in that** at least one additive is added to the ceramic starting powder or the ceramic slip, which additive, during the heat treatment, is transformed in such a manner that as a result gas constituents in the ceramic powder are displaced or bonded in a chemical reaction, or that gases released by the additive set a partial pressure in the ceramic powder, and **in that** before or during the transformation of the additive, a purge is carried out using a low-nitrogen or nitrogen-free gas or gas mixture.

2. Process for producing a ceramic powder, in which at least one ceramic starting powder or a ceramic slip is subjected to a heat treatment to produce a primary product, from which the ceramic powder is obtained, **characterized in that** during the heat treatment the ceramic starting powder or the ceramic slip is transformed in such a manner that gas constituents in the ceramic powder are displaced or bonded in a chemical reaction or that gases released from the ceramic starting powder or from the ceramic slip set a partial pressure in the ceramic powder, and **in that** before or during the transformation, a purge is carried out using a low-nitrogen or nitrogen-free gas or gas mixture.

3. Process according to Claim 1 or 2, **characterized in that** the heat treatment takes place in an arc melting process, and **in that** the ceramic starting powder or the ceramic slip and the additive are melted in the arc.

4. Process according to Claim 1 or 2, **characterized in that** the heat treatment leads to transforming through decomposition, evaporation, sublimation or a chemical reaction with release of gas.

5. Process according to Claim 1, **characterized in that** the ceramic starting powder, prior to the heat treatment, is stored in a preferably saturated vapour atmosphere of the additive.

6. Process according to Claim 1, **characterized in that** the additive is added during prior milling or mixing of the ceramic starting powder or slip.

7. Process according to Claim 1, **characterized in that** after the additive has been added to the ceramic starting powder, partial or complete drying, preferably spray drying or freeze drying, is carried out.

8. Process according to Claim 1 or 2, **characterized in that** the ceramic starting powder or the slip contains ZrO₂, Y₂O₃ or a mixture of ZrO₂ and Y₂O₃.

9. Process according to Claim 2, **characterized in that** the ceramic starting powder consists of zirconium hydroxide, yttrium hydroxide, aluminium hydroxide, zirconium dioxide, yttrium oxide or a mixture of these components.

10. Process according to Claim 1, **characterized in that** the additive is simultaneously used as binder, solvent or plasticizer for the ceramic starting powder or the ceramic slip.

11. Process according to at least one of the preceding claims, **characterized in that** the additive contains releasable oxygen, hydrogen, carbon, a combination of these gases or another gas which is heavier than air and is preferably substantially free of nitrogen and halogens.

12. Process according to at least one of the preceding claims, **characterized in that** the additive, during the transformation, forms ZrO₂, Y₂O₃, or oxides, preferably Al₂O₃, or a combination of these materials.

13. Process according to at least one of the preceding claims, **characterized in that** the additive promotes the sintering activity of the ceramic powder.

14. Process according to at least one of the preceding claims, **characterized in that** the additive is added as a milling auxiliary to the ceramic starting powder or the ceramic slip.

15. Process according to at least one of the preceding claims, **characterized in that** the additive simultaneously serves as binder or binder system for granulation and/or pelletization of the ceramic starting powder.

16. Process according to at least one of the preceding claims, **characterized in that** the additive is selected from the group consisting of water, CO₂ dry ice, methanol, propanol, polyvinyl alcohol, wax, polyvinyl butyral, butyl carbitol, polyglycol, propanediol, terpineol, zirconium butylate, aluminium stearate, zirconium hydroxide, yttrium hydroxide, aluminium hydroxide (Al(OH)₃ or AlO(OH)) or the alkaline metal or alkaline-earth metal oxides.

17. Process according to at least one of the preceding claims, **characterized in that** the oxygen partial pressure in the ceramic powder is set by selecting the additives.

18. Process according to at least one of the preceding claims, **characterized in that** during the transformation the additive takes up or releases a volume of gas which is in the range from 0.5 to 100 times the estimated total gas volume to be displaced.

19. Process according to Claim 1, **characterized in that** the primary product is processed further by milling to form the ceramic powder.

20. Process according to Claim 19, **characterized in that** the milling is carried out with subsequent grain size fractionation.

21. Use of the ceramic powder produced as described in at least one of the preceding claims for the production of planar, ceramic sensor elements.

## Revendications

1. Procédé de production d'une poudre céramique, selon lequel au moins une poudre céramique initiale ou une barbotine céramique est soumise à un traitement thermique pour obtenir un produit semi-fini, à partir duquel on obtient la poudre céramique,
**caractérisé en ce qu'**
on ajoute à la poudre céramique initiale ou à la barbotine céramique au moins un additif qui, lors du traitement thermique, se transforme en forçant des composants gazeux dans la poudre céramique ou en les liant dans une réaction chimique, ou pour que les gaz dégagés par l'additif règlent une pression partielle dans la poudre céramique, et on effectue avant ou pendant la transformation de l'additif, un rinçage avec un gaz ou un mélange gazeux pauvre en azote ou exempt d'azote.

2. Procédé de production d'une poudre céramique, selon lequel au moins une poudre céramique initiale ou une barbotine céramique est soumise à un traitement thermique pour obtenir un produit semi-fini, à partir duquel on obtient la poudre céramique,
**caractérisé en ce que**
la poudre céramique initiale ou la barbotine céramique se transforme lors du traitement thermique de telle façon que des composants gazeux sont forcés dans la poudre céramique ou liés dans une réaction chimique, ou que les gaz dégagés par la poudre céramique initiale ou la barbotine céramique règlent une pression partielle dans la poudre céramique, et on effectue, avant ou pendant la transformation, un rinçage avec un gaz ou un mélange gazeux pauvre en azote ou exempt d'azote.

3. Procédé selon la revendication 1 ou 2,
**caractérisé en ce que**
le traitement thermique est effectué dans un procédé de fusion à l'arc électrique, et la poudre céramique initiale ou la barbotine céramique et l'additif sont fondus dans l'arc électrique.

4. Procédé selon la revendication 1 ou 2,
**caractérisé en ce que**
le traitement thermique conduit à une transformation par décomposition, vaporisation, sublimation ou à une réaction chimique avec dégagement de gaz.

5. Procédé selon la revendication 1,
**caractérisé en ce que**
la poudre céramique initiale est stockée, avant le traitement thermique, dans une atmosphère de vapeur de l'additif, de préférence saturée.

6. Procédé selon la revendication 1,
**caractérisé en ce que**
l'additif est ajouté pendant un broyage ou un mélange préalable de la poudre céramique initiale ou de la barbotine.

7. Procédé selon la revendication 1,
**caractérisé en ce qu'**
un séchage partiel ou complet, de préférence un séchage par pulvérisation ou une lyophilisation, est effectué après avoir ajouté l'additif à la poudre céramique initiale.

8. Procédé selon la revendication 1 ou 2,
**caractérisé en ce que**
la poudre céramique initiale ou la barbotine contient ZrO₂, Y₂O₃ ou un mélange de ZrO₂ et Y₂O₃.

9. Procédé selon la revendication 2,
**caractérisé en ce que**
la poudre céramique initiale est composée d'hydroxyde de zirconium, d'hydroxyde d'yttrium, d'hydroxyde d'aluminium, de dioxyde de zirconium, d'oxyde d'yttrium ou d'un mélange de ces composants.

10. Procédé selon la revendication 1,
**caractérisé en ce qu'**
on utilise l'additif en même temps comme liant, solvant ou plastifiant pour la poudre céramique initiale ou la barbotine céramique.

11. Procédé selon au moins l'une quelconque des revendications précédentes,
**caractérisé en ce que**
l'additif contient de l'azote, de l'hydrogène, du carbone qui peuvent être libérés ou une combinaison de ces gaz ou un autre gaz qui est plus lourd que l'air et est de préférence largement exempt d'azote et d'halogènes.

12. Procédé selon au moins l'une quelconque des revendications précédentes,
**caractérisé en ce que**
l'additif forme, lors de la transformation, ZrO₂, Y₂O₃ ou des oxydes, de préférence Al₂O₃, ou une combinaison de ces produits.

13. Procédé selon au moins l'une quelconque des revendications précédentes,
**caractérisé en ce que**
l'additif favorise l'activité de frittage de la poudre céramique.

14. Procédé selon au moins l'une quelconque des revendications précédentes,
**caractérisé en ce que**
l'additif est ajouté en tant qu'agent auxiliaire de broyage à la poudre céramique initiale ou à la barbotine céramique.

15. Procédé selon au moins l'une quelconque des revendications précédentes,
**caractérisé en ce que**
l'additif sert en même temps de liant ou de système de liant pour une granulation et/ou une transformation en pastilles de la poudre céramique initiale.

16. Procédé selon au moins l'une quelconque des revendications précédentes,
**caractérisé en ce que**
l'additif est choisi parmi le groupe constitué par l'eau, la neige carbonique en CO₂, le méthanol, le propanol, l'alcool polyvinylique, la cire, le butyral polyvinylique, le butylcarbitol, le polyglycol, le propanediol, le terpinéol, le butylate de zirconium, le stéarate d'aluminium, l'hydroxyde de zirconium, l'hydroxyde d'yttrium, l'hydroxyde d'aluminium (Al(OH)₃ ou AlO(OH)) ou les oxydes alcalins ou alcalinoterreux.

17. Procédé selon au moins l'une quelconque des revendications précédentes,
**caractérisé en ce que**
la pression partielle d'oxygène dans la poudre céramique est réglée par le choix des additifs.

18. Procédé selon au moins l'une quelconque des revendications précédentes,
**caractérisé en ce que**
l'additif absorbe ou dégage lors de la transformation un volume de gaz qui se situe dans la gamme de 0,5 à 100 fois le volume de gaz estimé à déplacer au total.

19. Procédé selon la revendication 1,
**caractérisé en ce que**
le produit semi-fini est transformé en poudre céramique par broyage.

20. Procédé selon la revendication 20,
**caractérisé en ce que**
le broyage est suivi d'un fractionnement de la granulométrie.

21. Utilisation de la poudre céramique produite selon au moins l'une quelconque des revendications précédentes pour fabriquer des éléments céramiques plans pour capteurs.
